# EUROPÄISCHE PATENTANMELDUNG

(11) **EP 3 868 718 A1**
(43) Veröffentlichungstag der Anmeldung: **25.08.2021**
(21) Anmeldenummer: 21157423.1
(22) Anmeldetag: 16.02.2021
(51) Int. Cl.: C02F 1/28, C02F 1/68, B01J 20/20, B01J 20/04, B01J 20/06, B01J 20/28, B01J 20/02, C02F 1/42, C02F 1/44, B01D 61/14

(54) **VORRICHTUNG ZUR BEHANDLUNG VON TRINKWASSER**

(30) Priorität: 18.02.2020 DE 102020104157
(71) Anmelder: Perma-Trade Wassertechnik GMBH, 71229 Leonberg (DE)
(72) Erfinder: Ende, Dietmar, 71287 Weissach (DE); Ende, Helga, 71287 Weissach (DE); Sautter, Michael, 71229 Leonberg (DE)
(74) Vertreter: Herrmann, Jochen

(57) **Zusammenfassung**

Die Erfindung betrifft eine Vorrichtung zur Behandlung von Trinkwasser mit einer Behandlungskammer (11) in der ein Material angeordnet ist, welche ein basisch reagierendes Salz (22) aufnimmt, wobei der Behandlungskammer (11) ein Wasserzulauf (16) und ein Wasserablauf (15) zugeordnet sind. Zur Verbesserung des Behandlungsergebnisses ist es erfindungsgemäß vorgesehen, dass in der Behandlungskammer (11) zumindest bereichsweise ein Aktivkohlefilter in Blockform gehalten ist, wobei der Festkörper (20), der den Aktivkohlefilter bildet, zumindest Aktivkohle (21) und das basisch reagierende Salz (22) aufweist.

## Beschreibung

Die Erfindung betrifft eine Vorrichtung zur Behandlung von Trinkwasser mit einer Behandlungskammer in der ein Material angeordnet ist, welche ein basisch reagierendes Salz aufnimmt, wobei der Behandlungskammer ein Wasserzulauf und ein Wasserablauf zugeordnet sind.

Vorrichtungen zur Aufbereitung von Trinkwasser sind in vielfältiger Form aus dem Stand der Technik bekannt. Dabei kommen Aufbereitungsanlagen zum Einsatz, die in der wasserführenden Installation, beispielsweise einer Gebäude-Trinkwasserversorgung, installiert sind. Weiterhin sind auch Verfahren bekannt, bei denen direkt an der Zapfstelle (Point of use: POU) eine Wasseraufbereitung erfolgt. Dabei werden entweder direkt vor oder am Zapfhahn angeordnete Systeme verwendet. Bekannt sind auch offene Systeme, bei denen das Wasser in separaten Behältern aufbereitet wird.

Es besteht bei vielen Endverbrauchern der Wunsch nach einem magnesiumhaltigen Trinkwasser, da dieses Mineral, was die Gesundheit betrifft, sehr gut beleumundet ist. Zudem gibt es auch in bestimmten Verbraucherkreisen den Wunsch ein eher basisches Wasser z. B. mit einem pH-Wert > 8,5 zu trinken.

Eine Methode zur Anreicherung des Trinkwassers am Point of use mit Magnesium wird in der EP 2 094 611B1 beschrieben. Dort wird ein schwach saurer Kationenaustauscher, welcher zum überwiegenden Teil in die Magnesiumform konvertiert ist, von Trinkwasser durchströmt. Im Trinkwasser gelöstes Kalzium verdrängt dabei entsprechend der Selektivitätsreihe das etwas schwächer gebundene Magnesium und reichert so das Trinkwasser damit an. Das Trinkwasser wird dabei aber nicht nennenswert gefiltert oder von Bakterien befreit. Gleichzeitig besteht dabei die Gefahr, dass der pH-Wert im Stagnationsfall kleiner als 6,5 wird. Es gelangt so außerhalb des Bereichs, den die Trinkwasserverordnung (TVO) zulässt. Sind im wasserführenden Bereich Messingarmaturen angeordnet, so werden diese angegriffen und Schwermetalle in das Trinkwasser abgegeben.

Weiterhin gibt es einen Markt für die Aktivkohlefiltration von Trinkwässern am Point of use, da der Verbraucher Schadstoffe im Wasser befürchtet, die es zu reduzieren gilt. Mittels der Aktivkohlefiltration kann auch geschmacksneutrales Wasser erzeugt werden, wobei beispielsweise Chlor, welches im Trinkwasser gelöst ist, an der Aktivkohle abgeschieden wird. Im Stand der Technik wird dieser Markt mittels sogenannter Aktivkohlefilter in Blockform bedient. Solche Aktivkohlefilter sind in den Schriften DE 298 20 122 U1 und US 6,368,504 B1 beschrieben Hierbei wird fein gemahlene Aktivkohle mittels eines organischen Bindemittels zu einem Festkörper bei ca. 300°C gesintert. Über den Mahlgrad der Aktivkohle ist die Filterfeinheit einstellbar.

Aufgabe der Erfindung ist es eine Vorrichtung bzw. einen Aktivkohlefilter der eingangs erwähnten Art bereitzustellen, mit der eine verbesserte Aufbereitung von Trinkwasser, entsprechend den Wünschen der Verbraucher möglich ist.

Diese Aufgabe wird dadurch gelöst, dass in der Behandlungskammer zumindest bereichsweise ein Aktivkohlefilter in Blockform gehalten ist, wobei der Festkörper, der den Aktivkohlefilter bildet, zumindest Aktivkohle und ein basisch reagierendes Salz aufweist.

Die den Aktivkohlefilter betreffende Aufgabe wird dadurch gelöst, dass der Festkörper, der den Aktivkohlefilter bildet, zumindest Aktivkohle und das basisch reagierende Salz aufweist.

Erfindungsgemäß wird bei der Herstellung des Aktivkohlefilters in Blockform das basisch reagierende Salz fein gemahlen und mit der ebenfalls gemahlenen Aktivkohle gemischt. Anschließend können diese Stoffe unter Verwendung eines Bindermaterials zu einem Aktivkohlefilter in Blockform in einem Ofen gesintert werden. Dabei bildet der Aktivkohlefilter einen porösen und von Wasser durchströmbaren Filter-Festkörper, der das basisch reagierende Salz intrinsisch aufnimmt. Wenn dieser Aktivkohlefilter von Wasser durchströmt wird, so lassen sich auf einfache Weise große Mengen Trinkwasser kontinuierlich behandeln. Dabei wird zum einen die Magnesiumkonzentration im Wasser erhöht. Zum anderen wird das Wasser gleichzeitig im Aktivkohlefilter filtriert und adsorptiv gereinigt. Zusätzlich werden insbesondere auch Schwermetalle und andere Giftstoffe aus dem Wasser herausgereinigt. Hierdurch wird dementsprechend die Qualität des Trinkwassers erheblich verbessert. Mittels des basisch reagierenden Salzes lässt sich der pH-Wert des Trinkwassers zusätzlich zum basischen hin verschieben.

Gemäß einer bevorzugten Erfindungsvariante kann es vorgesehen sein, dass der den Aktivkohlefilter bildende Festkörper als selbsttragender Sinterkörper ausgebildet ist, der einen Binder, vorzugsweise in Form eines thermoplastischen Materials aufweist. Auf diese Weise erhält man einen Aktivkohlefilter mit hohen adsorptiven Eigenschaften und sehr guten mechanischen Filtereigenschaften. Die Herstellung dieses Filter kann beispielsweise so erfolgen, dass sehr feine Aktivkohle mit einem hochmolekularen Polyethylen trocken gemischt wird. Das Gemisch wird in eine Form eingebracht und unter Ausschluss von Luftzufuhr auf eine Temperatur erhitzt, die wesentlich über dem Schmelzbereich des Bindemittels liegt. Bei diesen Temperaturen schmilzt das Bindemittel langsam. Nachdem das Bindemittel aufgeschmolzen ist, kann der gefertigte Aktivkohlefilter langsam abgekühlt werden und ist dann als Sinterkörper einsatzbereit. Bedarfsweise kann das Bindemittel auch verschwelt werden, sodass größtenteils nur noch das Kohlenstoffgerüst des Binders im Sinterkörper übrigbleibt, wobei dieses Kohlenstoffgerüst dann zur Absorption beitragen kann.

Hierbei kann es auch insbesondere vorgesehen sein, dass der Anteil des Binders im Sinterkörper im Bereich von 1 Gew.-% bis 50 Gew. -% und der Anteil der Aktivkohle im Sinterkörper 50 Gew.-% bis 99 Gew.-% beträgt.

Weiter vorzugsweise kann es vorgesehen sein, dass der Anteil des Binders im Sinterkörper im Bereich von 5 Gew.-% bis 40 Gew. -% und der Anteil der Aktivkohle im Sinterkörper 50 Gew.-% bis 99 Gew.-% beträgt.

Besonders bevorzugt kann es vorgesehen sein, dass der Anteil des Binders im Sinterkörper im Bereich von 8 Gew.-% bis 30 Gew. -%, und der Anteil der Aktivkohle im Sinterkörper 70 Gew.-% bis 92 Gew-% beträgt.

Vorzugsweise kann der Binder von einem Polyethylenhomopolymer und/oder - copolymer gebildet sein. Dieser Binder zeichnet sich durch eine sehr gute Biokompatibilität aus. Der Binder weist eine hohe Viskosität, eine niedrige Neigung zum Beschichten der Aktivkohle, eine hohe Porösität und eine niedrige Sensitivität für den Sinterprozess auf. Der Binder zeichnet sich weiterhin durch eine niedrige Schüttdichte und hohe Oberfläche aus. Für die Fertigung des Aktivkohlefilters kann er in einer Korngröße von 100 µm bis 140 µm bereitgestellt werden.

Gemäß einer möglichen Erfindungsvariante kann es vorgesehen sein, dass als Binder für die Herstellung des Sinterkörpers ein Polyethylenhomopolymer und/oder - copolymer verwendet ist, mit einem Schmelzindex (MFR 190/15) von 1,2 g/10 min bis 10 g/10 min, einer Molekulargewichtsverteilung Mw/Mn von 3 bis 10, einer Schüttdichte von 0,1 g/cm3 bis 0,5 g/cm3 und einer Korngröße von 60 µm bis 200 µm. Mit einem solchen Binder kann der Aktivkohlefilter mit besonders hoher Festigkeit und niedrigem Bindegehalt hergestellt werden.

Vorzugsweise kann es hierbei vorgesehen sein, dass der Binder einen Schmelzindex (MFR 190/15) von 1,4 g/10 min bis 5 g/10 min, eine Molekulargewichtsverteilung Mw/Mn von 4 bis 8, eine Schüttdichte von 0,13 g/cm3 bis 0,3 g/cm3 und eine Korngröße von 80 µm bis 180 µm aufweist.

Besonders bevorzugt lässt sich ein solcher Binder verwenden mit einem Schmelzindex (MFR 190/15) von 1,4 g/10 min bis 3 g/10 min, einem Molekulargewichtsverteilung Mw/Mn von 4 bis 8, einer Schüttdichte von 0,15 g/cm3 bis 0,28 g/cm3 und einer Korngröße von 80 µm bis 160 µm.

Nach der Erfindung kann es insbesondere auch vorgesehen sein, dass das basisch reagierende Salz schwerlöslich ist. Auf diese Weise kann eine kontinuierliche und langsame Auflösung des Salzes vorgenommen werden. Vorzugsweise wird dabei ein Mineralsalz auf Magnesium- und/oder Zinkbasis, besonders bevorzugt Magnesiumhydroxid oder Magnesiumoxid verwendet, bzw. Zinkhydroxid oder Zinnoxid. Schwerlöslich kann in diesem Zusammenhang bedeuten, dass sich in 1 Liter Wasser weniger als 50 mg des verwendeten schwerlöslichen Salzes lösen kann, vorzugsweise weniger als 20 mg, besonders bevorzugt weniger als 10 mg.

Wenn vorgesehen ist, dass der Anteil des basisch reagierenden Salzes im Festkörper im Bereich von 10 Gew.% bis 50 Gew.% beträgt, dann kann ein ausreichend stabiler und eigenständiger Aktivkohlefilter in Blockform gefertigt werden. Die dabei verwendete Menge an basisch reagierenden Salzes ist ausreichend, um eine große Menge an Wasser behandeln zu können. In dem genannten Bereich ist es insbesondere möglich, mehrere 1000 I an Wasser kontinuierlich zu behandeln.

Besonders bevorzugt kann es vorgesehen sein, dass die Filterfeinheit des Aktivkohlefilters im Bereich zwischen 0,3 µm und 10 µm beträgt. Mit einer solchen Filterfeinheit lässt sich mit dem üblicherweise in Trinkwasserleitungen anstehenden Wasserdruck ein ausreichender Volumendurchsatz verwirklichen. Über die gewählte Filterfeinheit lassen sich Schwebstoffe aus dem Trinkwasser herausfiltern. Abhängig von der geplanten Verwendung können mit besonders kleinen Filterfeinheiten nicht nur Schwebstoffe aus dem Trinkwasser herausgefiltert werden, sondern zusätzlich auch Bakterien. Dies ist insbesondere bis zu einer Filterfeinheit von 0,4 µm möglich.

Eine erfindungsgemäße Vorrichtung kann auch dadurch gekennzeichnet sein, dass in Strömungsrichtung nach dem Aktivkohlefilter ein Feinfilter derart angeordnet ist, dass das vom Aktivkohlefilter kommende Wasser durch den Feinfilter geleitet ist. Hierdurch wird eine störende Trübung, beispielsweise durch ausgespültes Salz verhindert. Insbesondere können Mikrofilter oder Ultrafiltrationsmembrane eingesetzt werden.

Zur Verwirklichung einer kompakten Bauweise kann es dabei insbesondere auch vorgesehen sein, dass im Inneren des Aktivkohlefilters eine Kavität angeordnet ist, dass in die Kavität der Feinfilter eingesetzt ist, der einen Wasserablaufbereich im Inneren des Aktivkohlefilters umschließt, dass dieser Wasserablaufbereich an den Wasserablauf angeschlossen ist, und dass der Wasserzulauf so angeordnet ist, dass das zu behandelnde Wasser dem Aktivkohlefilter an seinem Außenumfang zugeführt ist, dieses Wasser den Aktivkohlefilter durchströmt und dann durch den Feinfilter hindurch in den Wasserablaufbereich gelangt.

Um mit einem solchen Feinfilter insbesondere auch Bakterien aus dem Trinkwasser ausfiltern zu können, ist es vorzugsweise vorgesehen, dass der Feinfilter eine Ultrafiltrationsmembrane aufweist und/oder dass die Filterfeinheit des Feinfilters im Bereich zwischen 0,05 µm und 1 µm, vorzugsweise im Bereich zwischen 0,05 µm und 0,4 µm beträgt. Insbesondere lassen sich so Bakterien aus dem Trinkwasser herausfiltern, die den Aktivkohlefilter passiert haben.

Eine besonders bevorzugte Erfindungsvariante ist dergestalt, dass ein schwach saurer lonentauscher in Strömungsrichtung vor dem Aktivkohlefilter angeordnet ist, derart dass zumindest ein Teil des zu behandelnden Wassers den lonentauscher durchströmt und anschließend dem Aktivkohlefilter zugeführt ist. Mit einem solchen lonentauscher lässt sich das Trinkwasser entcarbonisieren und damit seine Härte herabsetzen. Der saure Ablauf aus dem lonentauscher kann zumindest weitgehend mit dem basisch reagierenden Salz des Aktivkohlefilters kompensiert werden. Dabei bewegt sich das aufbereitete und gefilterte Wasser nach dem Aktivkohlefilter vorzugsweise innerhalb der pH Grenzen 6,5 bis 9,5 der Trinkwasserverordnung. Es hat sich gezeigt, dass sich zu diesem Zweck insbesondere ein schwach saurer Kationentauscher, der vorzugsweise in der Wasserstoffionen-Form vorliegt, eignet. Ein solcher lonentauscher dient der Reduzierung der Wasserhärte und kann gleichzeitig auch Schwermetalle, beispielsweise Kupferionen aus dem Trinkwasser entfernen.

Hierbei kann es zur Verwirklichung einer kompakten Bauweise für die erfindungsgemäße Vorrichtung vorgesehen sein, dass im Inneren des Aktivkohlefilters eine Kavität angeordnet ist, dass in der Kavität der schwach saure lonentauscher, vorzugsweise in Form einer Schüttung eingebracht ist, dass die Kavität an den Wasserzulauf angeschlossen ist, und dass der Wasserablauf so angeordnet ist, dass das behandelte Wasser aus dem Außenumfang des Aktivkohlefilters ausströmt und anschließend mittelbar oder unmittelbar zum Wasserablauf gelangt.

Wird der lonentauscher in Form einer Schüttung verwendet, so ergibt sich für die Vorrichtung ein niedriger Teileaufwand. Insbesondere lässt sich dabei eine Bauweise verwirklichen, bei der die Schüttung direkt von dem Material des Aktivkohlefilters in der Kavität gehalten wird.

Die Erfindung wird im Folgenden anhand von in den Zeichnungen dargestellten Ausführungsbeispielen näher erläutert. Es zeigen:
Figur 1 in schematischer Darstellung eine Vorrichtung zur Behandlung von Trinkwasser, teilweise in Schnittansicht,
Figur 2 in schematischer Darstellung eine weitere Vorrichtung zur Behandlung von Trinkwasser, teilweise in Schnittansicht und
Figur 2a ein Detail der Vorrichtung gemäß Figur 2 in Seitendarstellung und im Schnitt.

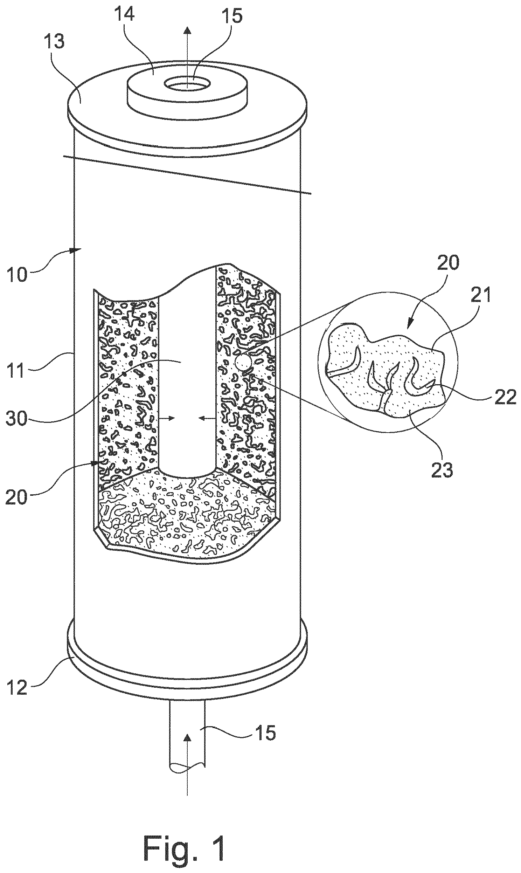

Figur 1 zeigt eine Vorrichtung zur Behandlung von Trinkwasser, wie sie beispielsweise am POU einer Trinkwasserversorgung eingesetzt werden kann.

Die Vorrichtung besitzt einen Filtergehäuse 10, welches aus einem druckfesten Material besteht, beispielsweise aus einem geeigneten Kunststoffmaterial oder einem Metallwerkstoff. Das Filtergehäuse 10 ist im Wesentlichen in Form eines Rohres ausgebildet und an seiner Oberseite mit einem Deckel 13 und an seiner Unterseite mit einem Boden 12 verschlossen. Wie Figur 1 zeigt, weist der Deckel 13 einen Anschluss 14 auf. Dieser Anschluss 14 bildet einen Wasserablauf 16. Der Boden 12 ist entsprechend mit einem Anschluss für einen Wasserzulauf 15 ausgestattet. In Figur 1 ist die Fließrichtung des Wassers mit Pfeilen dargestellt.

Das Filtergehäuse 10 umgibt eine Behandlungskammer 11. In der Behandlungskammer 11 ist ein Aktivkohlefilter in Blockform untergebracht. Der Aktivkohlefilter ist entsprechend als formstabiles Sinterteil gefertigt.

Erfindungsgemäß weist der Aktivkohlefilter eine Mischung aus Aktivkohle 21 und basisch reagierendem Salz 22 auf. In der vergrößerten Detaildarstellung in Figur 1 ist dies symbolisch dargestellt. Wie die Zeichnung erkennen lässt, werden die Aktivkohle 21 und das basischer reagierende Salz 22 in dem Festkörper 20, der den Aktivkohlefilter bildet, mittels eines Binders 23 zusammengehalten. Dieser Binder 23 wird von einem thermoplastischen Material gebildet.

Der Aktivkohlefilter bildet einen porösen Körper. Die Porenstruktur dieses Körpers kann von Wasser durchflossen werden. Der Aktivkohlefilter bildet so eine Filtereinheit. Wie Figur 1 erkennen lässt, ist der Festkörper 20, der den Aktivkohlefilter bildet als Hohlkörper ausgebildet und weist eine Kavität auf. In diese Kavität ist ein Feinfilter 30 eingebaut. Der Feinfilter 30 ist in Form einer Röhre ausgebildet, die an ihrem, dem Boden 12 zugewandten Ende abgeschlossen ist. An der dem Boden abgewandten Seite ist die Röhre an den Wasserablauf 16 angeschlossen.

Während des Betriebseinsatzes wird das zu behandelnde Trinkwasser über den Wasserzulauf 15 zugeführt. Dieses Trinkwasser gelangt in die Behandlungskammer 11. Dort durchströmt das zu behandelnde Wasser den Festkörper 20 und wird dabei an der Aktivkohle 21 behandelt. Entsprechend erfolgt hier eine Entcarbonisierung des Trinkwassers zum Zwecke der Reduzierung der Härte des Wassers. Weiterhin werden an der Aktivkohle 21 Schadstoffe, beispielsweise Kupferionen abgeschieden. Zudem nimmt die Aktivkohle 21 störende Geschmacksstoffe, wie beispielsweise Chlor auf.

Wenn das zu behandelnde Wasser den Festkörper 20 durchströmt, so löst es das basisch reagierend Salz 22 aus dem Aktivkohlefilter heraus. Hierdurch wird der pH-Wert des Wassers in Richtung wunschgemäß zum basischen hin verschoben. Als basisch reagierendes Salz 22 ist vorzugsweise ein Mineralsalz auf Magnesium- und/oder Zinkbasis, besonders bevorzugt Magnesiumhydroxid oder Magnesiumoxid oder Zinkhydroxid oder Zinkoxid, eingesetzt. Entsprechend lösen sich Magnesiumionen und/oder Zinkionen im durchströmenden Wasser. Da sich bei diesen Materialien um schwerlösliche Salze 22 handelt, werden sie nur langsam aus dem Festkörper 20 herausgelöst und damit kontinuierlich in das vorbeiströmenden Wasser eindosiert.

Im Anschluss an den Festkörper 20 durchströmt das behandelte Wasser die Wandung des Feinfilters 30. Abhängig von der Feinheit des Filters werden hier Schwebstoffe und/oder Bakterien abgeschieden. Zudem wird verhindert, dass es infolge ausgeschwemmten Salzes 22 unmittelbar nach der Inbetriebnahme zu einer Trübung des Wassers kommt.

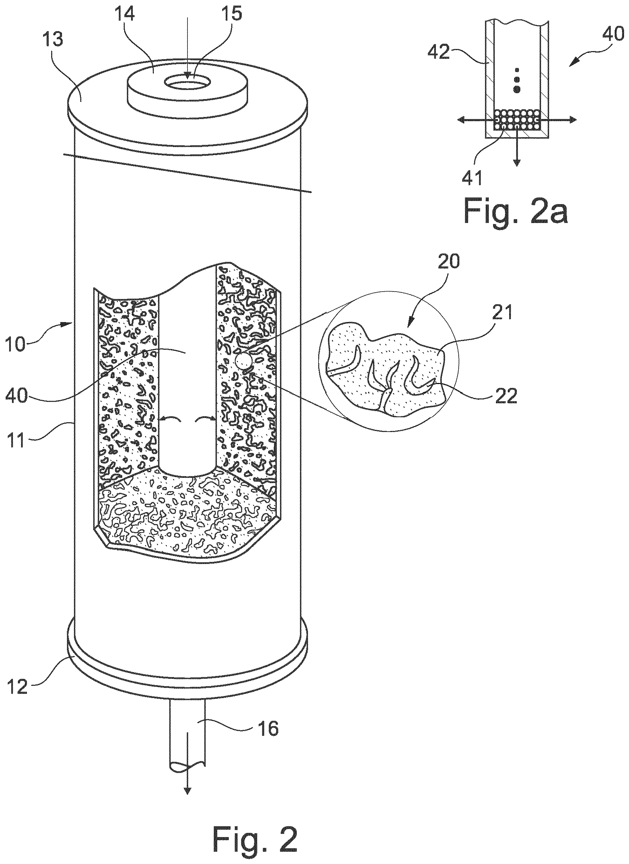

In Figur 2 ist eine alternative Ausgestaltungsvariante gezeigt. Der Aufbau dieser Vorrichtung nach Figur 2 entspricht im Wesentlichen dem Aufbau der Vorrichtung nach Figur 1. Somit kann unter Vermeidung von Wiederholungen auf die vorstehenden Ausführungen Bezug genommen werden.

Im Unterschied zu der Ausgestaltung nach Figur 1 sind vorliegend der Wasserzulauf 15 und der Wasserablauf 16 vertauscht.

Der Festkörper 20, der den Aktivkohlefilter aufweist, bildet wieder eine Kavität. In diese Kavität ist ein saurer lonentauscher 40, besonders bevorzugt ein schwach einer Schüttung von lonentauscher Harz-Teilchen 41 gebildet. Diese Schüttung ist vorzugsweise direkt in die Kavität eingefüllt. Als lonentauscher kann beispielsweise das folgende Produkt Verwendung finden: Lanxess-Lewatit 8227.
Figur 2A zeigt eine Alternative. Dabei sind lonentauscherharz-Teilchen 41 in einen von Wasser durchströmbaren Körper 42 eingefüllt. Dieser Körper 42 ist dann in die Kavität des Festkörpers 20 eingesetzt.

Während des Betriebseinsatzes strömt das zu behandelnde Wasser über den Wasserzulauf 15 in die Behandlungskammer 11. Dabei gelangt das Wasser zunächst zu dem lonentauscher 40. Mittels des lonentauscher 40 wird das Trinkwasser entcarbonisiert und damit dessen Härte herabgesetzt. Unerwünschte Schwermetalle, beispielsweise Kupferionen können von dem lonentauscher aufgenommen werden. Das Trinkwasser wird über den lonentauscher leicht angesäuert. Anschließend gelangt dieses Wasser dann in den Festkörper 20. Hier wird es wieder, wie oben in Bezug auf Figur 1 beschrieben, behandelt. Das basisch reagierende Salz 22 verschiebt nun bei dieser Ausgestaltungsvariante den pH-Wert des Wassers wieder in Richtung hin zu einem höheren pH-Wert. Dabei wird die Behandlung so vorgenommen, dass das aufbereitete und gefilterte Wasser sich möglichst innerhalb der Grenzen befindet, die die Trinkwasserverordnung vorgibt (pH 6,5 bis pH 9,5). Nachdem das Wasser den Festkörper 20 durchströmt hat, gelangt es über den Wasserablauf 16 aus der Behandlungsvorrichtung. Es kann dann entnommenen und vom Benutzer zu Trinkwasserzwecken verwendet werden.

## Patentansprüche

1. Vorrichtung zur Behandlung von Trinkwasser mit einer Behandlungskammer (11) in der ein Material angeordnet ist, welche ein basisch reagierendes Salz (22) aufnimmt, wobei der Behandlungskammer (11) ein Wasserzulauf (16) und ein Wasserablauf (15) zugeordnet sind,
**dadurch gekennzeichnet,**
**dass** in der Behandlungskammer (11) zumindest bereichsweise ein Aktivkohlefilter in Blockform gehalten ist, wobei der Festkörper (20), der den Aktivkohlefilter bildet, zumindest Aktivkohle (21) und das basisch reagierende Salz (22) aufweist.

2. Vorrichtung nach Anspruch 1, **dadurch gekennzeichnet, dass** der den Aktivkohlefilter bildende Festkörper (20) als selbsttragender Sinterkörper ausgebildet ist, der einen Binder (23), vorzugsweise in Form eines thermoplastischen Materials aufweist.

3. Vorrichtung nach Anspruch 2, **dadurch gekennzeichnet, dass** der Anteil des Binders (23) im Sinterkörper im Bereich von 1 Gew.-% bis 50 Gew. -% und der Anteil der Aktivkohle (21) im Sinterkörper 50 Gew.-% bis 99 Gew.-% beträgt, vorzugsweise dass der Anteil des Binders(23) im Sinterkörper im Bereich von 5 Gew.-% bis 40 Gew. -% und der Anteil der Aktivkohle (21) im Sinterkörper 50 Gew.-% bis 99 Gew.-% beträgt,
besonders bevorzugt dass der Anteil des Binders(23) im Sinterkörper im Bereich von 8 Gew.-% bis 30 Gew. -%, und der Anteil der Aktivkohle (21) im Sinterkörper 70 Gew.-% bis 92 Gew-% beträgt,
und dass der Binder (23) vorzugsweise von einem Polyethylenhomopolymer und/oder -copolymer gebildet ist.

4. Vorrichtung nach Anspruch 2 oder 3, **dadurch gekennzeichnet, dass** als Binder (23) für die Herstellung des Sinterkörpers ein Polyethylenhomopolymer und/oder -copolymer verwendet ist, mit einem Schmelzindex (MFR 190/15) von 1,2 g/10 min bis 10 g/10 min, einer Molekulargewichtsverteilung Mw/Mn von 3 bis 10, einer Schüttdichte von 0,1 g/cm³ bis 0,5 g/cm³ und einer Korngröße von 60 µm bis 200 µm,
vorzugsweise mit einem Schmelzindex (MFR 190/15) von 1,4 g/10 min bis 5 g/10 min, einer Molekulargewichtsverteilung Mw/Mn von 4 bis 8, einer Schüttdichte von 0,13 g/cm³ bis 0,3 g/cm³ und einer Korngröße von 80 µm bis 180 µm,
besonders bevorzugt mit einem Schmelzindex (MFR 190/15) von 1,4 g/10 min bis 3 g/10 min, einem Molekulargewichtsverteilung Mw/Mn von 4 bis 8, einer Schüttdichte von 0,15 g/cm³ bis 0,28 g/cm³ und einer Korngröße von 80 µm bis 160 µm.

5. Vorrichtung nach einem der Ansprüche 1 bis 4, **dadurch gekennzeichnet, dass** das basisch reagierende Salz (22) schwerlöslich ist, vorzugsweise ein Mineralsalz auf Magnesium- oder Zinkbasis, besonders bevorzugt ein Magnesiumhydroxid oder ein Magnesiumoxid ist.

6. Vorrichtung nach einem der Ansprüche 1 bis 5, **dadurch gekennzeichnet, dass** der Anteil des basisch reagierenden Salzes (22) im Festkörper (20) im Bereich von 10 Gewichtsprozent bis 50 Gewichtsprozent beträgt.

7. Vorrichtung nach einem der Ansprüche 1 bis 6, **dadurch gekennzeichnet, dass** die Filterfeinheit des Aktivkohlefilters im Bereich zwischen 0,3 µm und 10 µm beträgt.

8. Vorrichtung nach einem der Ansprüche 1 bis 7, **dadurch gekennzeichnet, dass** in Strömungsrichtung nach dem Aktivkohlefilter ein Feinfilter (30) derart angeordnet ist, dass das vom Aktivkohlefilter kommende Wasser durch den Feinfilter(30) geleitet ist.

9. Vorrichtung nach einem der Ansprüche 1 bis 8, **dadurch gekennzeichnet, dass** Im Inneren des Aktivkohlefilters eine Kavität angeordnet ist, dass in die Kavität der Feinfilter (30) eingesetzt ist, der einen Wasserablaufbereich im Inneren des Aktivkohlefilters umschließt, dass dieser Wasserablaufbereich an den Wasserablauf (16) angeschlossen ist, und dass der Wasserzulauf (15) so angeordnet ist, dass das zu behandelnde Wasser dem Aktivkohlefilter an seinem Außenumfang zugeführt ist, dieses Wasser den Aktivkohlefilter durchströmt und dann durch den Feinfilter (30) hindurch in den Wasserablaufbereich gelangt.

10. Vorrichtung nach Anspruch 8 oder 9, **dadurch gekennzeichnet**, das der Feinfilter (30) eine Ultrafiltrationsmembrane aufweist und/oder die Filterfeinheit des Feinfilters (30) im Bereich zwischen 0,05 µm und 1 µm, vorzugsweise im Bereich zwischen 0,05 µm und 0,4 µm beträgt.

11. Vorrichtung nach einem der Ansprüche 1 bis 10, **dadurch gekennzeichnet, dass** ein schwach saurer lonentauscher (40) in Strömungsrichtung vor dem Aktivkohlefilter angeordnet ist, derart dass zumindest ein Teil des zu behandelnden Wassers den lonentauscher (40) durchströmt und anschließend dem Aktivkohlefilter zugeführt ist.

12. Vorrichtung nach Anspruch 11, **dadurch gekennzeichnet**, das der schwach saure lonentauscher (40) ein schwach saurer Kationentauscher ist.

13. Vorrichtung nach einem der Ansprüche 11 oder 12, **dadurch gekennzeichnet, dass** im Inneren des Aktivkohlefilters eine Kavität angeordnet ist, dass in der Kavität der schwach saure lonentauscher (40), vorzugsweise in Form einer Schüttung, eingebracht ist, dass die Kavität an den Wasserzulauf (15) angeschlossen ist, und dass der Wasserablauf (15) so angeordnet ist, dass das behandelte Wasser aus dem Außenumfang des Aktivkohlefilters ausströmt und anschließend mittelbar oder unmittelbar zum Wasserablauf (15) gelangt.

14. Aktivkohlefilter in Blockform gehalten für eine Vorrichtung zur Behandlung von Trinkwasser, wobei der Festkörper (20), der den Aktivkohlefilter bildet, zumindest Aktivkohle (21) und das basisch reagierende Salz (22) aufweist.

15. Aktivkohlefilter nach Anspruch 14 **gekennzeichnet durch** einen der Ansprüche 1 bis 12.
